# EUROPÄISCHE PATENTSCHRIFT

(11) **EP 4 172 513 B1**
(45) Veröffentlichungstag und Bekanntmachung des Hinweises auf die Patenterteilung: **10.01.2024**
(21) Anmeldenummer: 21739539.1
(22) Anmeldetag: 02.06.2021
(51) Int. Cl.: F16H 63/34, F16H 61/02

(54) **PARKSPERRENBETÄTIGUNGSSYSTEM MIT DOPPELTWIRKENDEM BETÄTIGUNGSZYLINDER AM VERRIEGELUNGSELEMENT; SOWIE ANSTEUERUNGSVERFAHREN**
PARKING LOCK ACTUATION SYSTEM WITH A DOUBLE-ACTING ACTUATION CYLINDER ON THE LOCKING ELEMENT, AND ACTUATION METHOD
SYSTÈME D'ACTIONNEMENT DE VERROUILLAGE DE STATIONNEMENT DOTÉ D'UN CYLINDRE D'ACTIONNEMENT À DOUBLE ACTION SUR L'ÉLÉMENT DE VERROUILLAGE, ET PROCÉDÉ D'ACTIONNEMENT

(30) Priorität: 29.06.2020 DE 102020117021
(43) Veröffentlichungstag der Anmeldung: 03.05.2023
(73) Patentinhaber: Schaeffler Technologies AG & Co. KG, 91074 Herzogenaurach (DE)
(72) Erfinder: GREB, Peter, 77833 Ottersweier (DE); MAN, Laszlo, 77833 Ottersweier (DE)
(86) Internationale Anmeldenummer: PCT/DE2021/100479
(87) Internationale Veröffentlichungsnummer: WO 2022/002297

(56) Entgegenhaltungen:
- DE-A1-102011 105 068
- DE-A1-102014 018 123
- DE-A1-102015 214 037

## Beschreibung

Die Erfindung betrifft ein Parksperrenbetätigungssystem für ein Kraftfahrzeug, vorzugsweise ein hybridisches oder rein elektrisches Kraftfahrzeug, mit einem mit einer Parksperre koppelbaren oder gekoppelten Betätigungselement, welches Betätigungselement zwischen einer Sperrstellung, in der die Parksperre aktiv ist / ein Abtriebsbestandteil des Kraftfahrzeuges gegen eine Rotation gesperrt ist, und einer Entsperrstellung, in der die Parksperre inaktiv ist / der Abtriebsbestandteil des Kraftfahrzeuges in seiner Rotation freigegeben ist, verschiebbar ist, und mit einem zum formschlüssigen Fixieren / Halten des Betätigungselementes in seiner Entsperrstellung ausgebildeten Verriegelungselement. Des Weiteren betrifft die Erfindung ein Verfahren zum Ansteuern dieses Parksperrenbetätigungssystems.

Gattungsgemäße Parksperrenbetätigungssysteme sind aus dem Stand der Technik bereits hinlänglich bekannt. Beispielsweise offenbart die DE 10 2017 102 804 A1 eine Vorrichtung und ein Verfahren zum Betätigen einer Parksperre. Weitere Parksperren und entsprechende Verfahren sind aus der Offenlegungsschrift DE 10 2014 018 123 A1, auf welcher die zweiteilige Anspruchsfassung basiert, sowie den Dokumenten DE 10 2015 214 037 A1 und DE 10 2011 105 068A1 bekannt

Bei diesen aus dem Stand der Technik bekannten Ausführungen hat es sich herausgestellt, dass mittels des Parksperrenbetätigungssystems zwar prinzipiell ein selbsttätiges Schließen der Parksperre sichergestellt wird, ein Transportzustand des Kraftfahrzeuges, in dem ein Bordnetz abgeschaltet ist oder nicht ausreichend aufgeladen ist bzw. eine Verbrennungskraftmaschine ausgeschaltet ist, nicht möglich ist und die Parksperre geschlossen bleibt. Auch eine sogenannte Limp-Home-Funktionalität ist nicht umsetzbar.

Es ist daher Aufgabe der vorliegenden Erfindung, ein Parksperrenbetätigungssystem zur Verfügung zu stellen, das mit einfachen Mitteln ein Transportieren des Kraftfahrzeuges und eine Limp-Home-Funktionalität unabhängig von dem Ladezustand eines Bordnetzes des Kraftfahrzeuges und unabhängig von einem Zustand eines Hydrauliksystems gestattet.

Gemäß der vorliegenden Erfindung wird die obige Aufgabe mit einem Parksperrenbetätigungssystem nach Anspruch 1 gelöst und zwar dadurch gelöst, dass das Betätigungselement und das Verriegelungselement jeweils mit einem hydraulischen Betätigungszylinder wirkverbunden sind, wobei die beiden hydraulischen Betätigungszylinder seitens eines Druckraums mit einer gemeinsamen Hydraulikmittelzuführleitung verbunden sowie über ein erstes Ventil mit einer Pumpe gekoppelt sind, und wobei der Betätigungszylinder des Verriegelungselementes ferner einen entgegengesetzt zu seinem Druckraum wirkenden Entriegelungsdruckraum aufweist, der über ein zweites Ventil mit der Pumpe koppelbar ist.

Durch einen solchen doppeltwirkenden Betätigungszylinder am Verriegelungselement werden mit einfachen Mitteln ein Transportzustand und eine Limp-Home-Funktionalität des Kraftfahrzeuges ermöglicht, während bei druckloser Hydraulikversorgung die Parksperre verlässlich entsperrt / inaktiv ist. Dadurch sind auch alle weiteren Betriebszustände des Parksperrenbetätigungssystems einfach ansteuerbar.

Weitergehende vorteilhafte Ausführungsformen sind mit den Unteransprüchen beansprucht und nachfolgend näher erläutert.

Demnach hat es sich auch als vorteilhaft herausgestellt, wenn das erste Ventil zwischen einem Ausgang der Pumpe einerseits und der Hydraulikmittelzuführleitung andererseits wirkend eingesetzt ist und derart ausgebildet ist, dass es in seiner (vorzugsweise als federnd abgestützte Ruhestellung ausgebildeten) ersten Stellung die Hydraulikmittelzuführleitung drucklos schaltet / mit einem Tank verbindet, während ein mit dem zweiten Ventil weiter verbundener Leitungsabschnitt mit dem Pumpenausgang verbunden ist, und in seiner zweiten Stellung den Pumpenausgang mit der Hydraulikmittelzuführleitung verbindet, während der mit dem zweiten Ventil weiter verbundene Leitungsabschnitt von dem Pumpenausgang abgetrennt ist. Dadurch sind die einzelnen Betriebszustände des Parksperrenbetätigungssystems einfach ansteuerbar. Das erste Ventil ist weiter bevorzugt als 4/2-Wegeventil realisiert, um den Aufbau des Parksperrenbetätigungssystems möglichst einfach zu halten.

Des Weiteren ist es von Vorteil, wenn das zweite Ventil derart ausgebildet ist, dass es in seiner ersten Stellung einen pumpenseitigen Leitungsabschnitt mit dem Entriegelungsdruckraum verbindet und in seiner zweiten Stellung den Entriegelungsdruckraum drucklos schaltet / mit einem Tank verbindet. Dadurch ergibt sich eine effizient ansteuerbare Koppelung des Verriegelungselementes zur Hydraulikseite hin. Das zweite Ventil ist weiter bevorzugt als 5/2-Wegeventil realisiert, um den Aufbau des Parksperrenbetätigungssystems möglichst einfach zu halten.

Vorteilhaft ist es zudem, wenn das zweite Ventil derart ausgebildet und angeschlossen ist, dass der pumpenseitige Leitungsabschnitt in der zweiten Stellung des zweiten Ventils mit einer hydraulischen Betätigungseinheit, vorzugsweise einer Kupplungsbetätigungseinheit, verbunden ist. Dadurch wird ein möglichst kompaktes System zur Versorgung mehrerer Bestandteile des Kraftfahrzeuges effizient arbeitend ausgebildet.

In diesem Zusammenhang ist es auch zweckmäßig, wenn die Pumpe mit weiteren hydraulischen Verbrauchern, vorzugsweise einem Getriebeschaltorgan und / oder einer Kühlmittelversorgungseinrichtung, gekoppelt oder koppelbar ist. Die Pumpe ist dann bevorzugt zur Versorgung aller Verbraucher schaltbar / ansteuerbar.

Für einen einfachen Aufbau ist es zudem von Vorteil, wenn die Pumpe als Reversierpumpe ausgebildet ist.

Für eine einfache Ansteuerbarkeit des Betätigungselementes ist es auch zweckmäßig, wenn ein das Betätigungselement in seiner Entsperrstellung haltender, elektrisch betätigter Haltemagnet vorhanden ist.

Des Weiteren betrifft die Erfindung ein Verfahren nach Anspruch 8 und zwar ein Verfahren zum Ansteuern eines erfindungsgemäßen Parksperrenbetätigungssystems nach zumindest einer der zuvor beschriebenen Ausführungen, wobei Betätigungselement in einem ersten Betriebszustand durch Verbinden der Hydraulikmittelzuführleitung mit dem Pumpenausgang und entsprechendem Druckaufbau an dem Pumpenausgang in seine Entsperrstellung gedrückt wird, während das Verriegelungselement beabstandet zu dem Betätigungselement ist, und in einem zweiten Betriebszustand, in einem druckbeaufschlagten Zustand des Druckraums des dem Verriegelungselement zugeordneten Betätigungszylinders, gegen das Betätigungselement gedrückt wird und in formschlüssigen Eingriff mit dem Betätigungselement gelangt.

Ferner ist es von Vorteil, wenn das Betätigungselement derart federvorgespannt ist, dass es in dem zweiten Betriebszustand, in seiner Entsperrstellung, durch diese Federvorspannung in eine eine selbsthemmende Verbindung zwischen dem Verriegelungselement und dem Betätigungselement verstärkende Position gedrückt ist und das Verriegelungselement bei erneutem Druckabfall an dem Betätigungszylinder des Betätigungselementes festgeklemmt ist. Dadurch wird der formschlüssige Kontakt zwischen dem Verriegelungselement und dem Betätigungselement auf möglichst einfache Weise umgesetzt.

Eine weiter vereinfachte Ansteuerung ergibt sich dadurch, dass der Formschluss zwischen dem Verriegelungselement und dem Betätigungselement wieder aufgehoben wird und das Verriegelungselement zurück in die Stellung des ersten Betriebszustandes gelangt, indem der Entriegelungsdruckraum über die Pumpe mit Druck beaufschlagt wird bis die selbsthemmende Verbindung zwischen dem Verriegelungselement und dem Betätigungselement aufgehoben ist.

Mit anderen Worten ausgedrückt, wird somit erfindungsgemäß ein Betätigungssystem für Normally-P-Parksperren mit zusätzlicher Transportfunktion mittels doppelt wirkendem Rastierzylinder (Betätigungszylinder) umgesetzt. Neben dem Transportmodus ist auch eine Limp-Home-Funktionalität bei Umsetzen einer Normally-P-Parksperre ermöglicht. Über eine parallele Anordnung von Sperrelementzylinder und Parksperrenzylinder wird eine rein hydraulische Lösung für den Transportmodus und die Limp-Home-Funktionalität realisiert.

Die Erfindung wird nun nachfolgend anhand von Figuren näher erläutert.

Es zeigen:

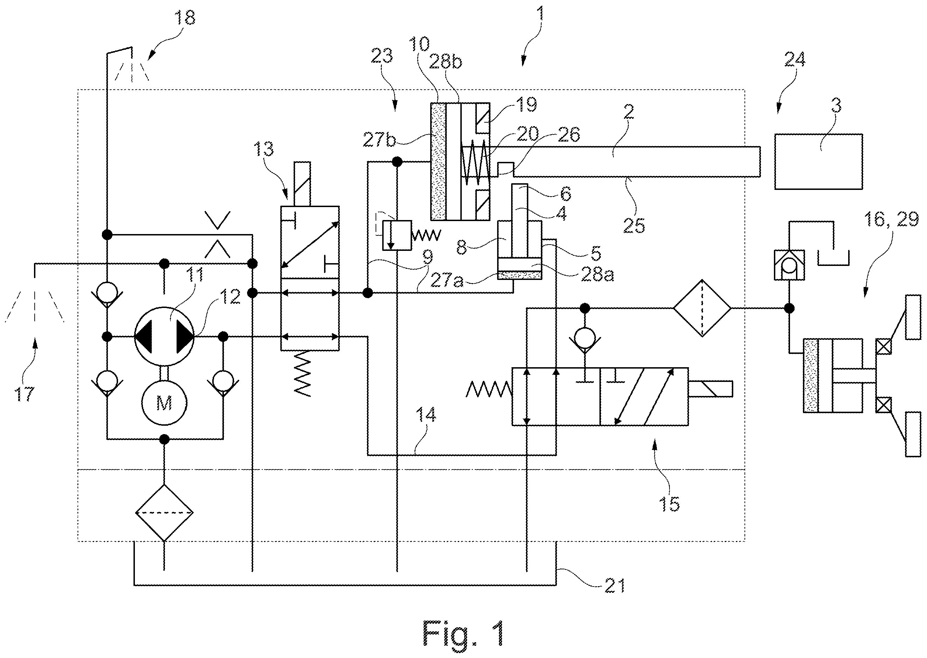

- Fig. 1: eine Prinzipdarstellung eines erfindungsgemäßen, nach einem ersten Ausführungsbeispiel ausgebildeten Parksperrenbetätigungssystems, wobei eine hydraulische Anbindung eines Betätigungselementes und eines Verriegelungselementes gut zu erkennen ist, und wobei sich das Betätigungselement und das Verriegelungselement in einer Grundstellung befinden, in der eine Parksperre aktiv ist,

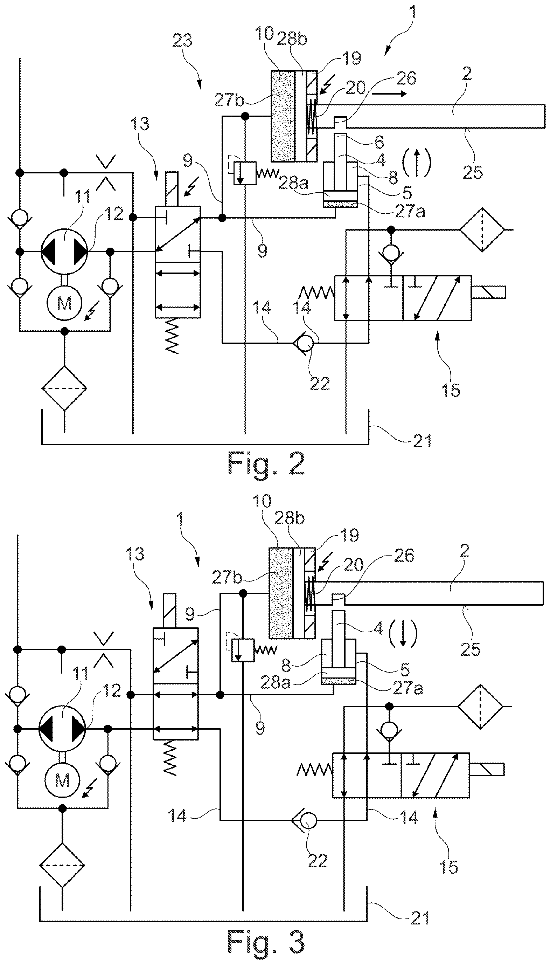

- Fig. 2: eine Prinzipdarstellung eines erfindungsgemäßen, nach einem zweiten Ausführungsbeispiel ausgebildeten Parksperrenbetätigungssystems, wobei ein Druckraum jeweils eines Betätigungszylinders des Betätigungselementes und des Verriegelungselementes mit Druck beaufschlagt ist, sodass das Betätigungselement von seiner als Sperrstellung ausgebildeten Grundstellung nach Fig. 1 in seine Entsperrstellung verschoben ist, das Verriegelungselement jedoch aufgrund eines befüllten Entriegelungsdruckraums noch beabstandet zu dem Betätigungselement angeordnet ist,
- Fig. 3: eine Prinzipdarstellung des Parksperrenbetätigungssystems des zweiten Ausführungsbeispiels, wobei gegenüber Fig. 2 die Druckräume der beiden Betätigungszylinder drucklos geschaltet sind, jedoch der Entriegelungsdruckraum des Verriegelungselementes mit einem Pumpendruck beaufschlagt ist, sodass das Verriegelungselement verlässlich beabstandet zu dem Betätigungselement abgestützt ist, und wobei ein das Betätigungselement in der Entsperrstellung haltender Haltemagnet weiterhin aktiviert ist,

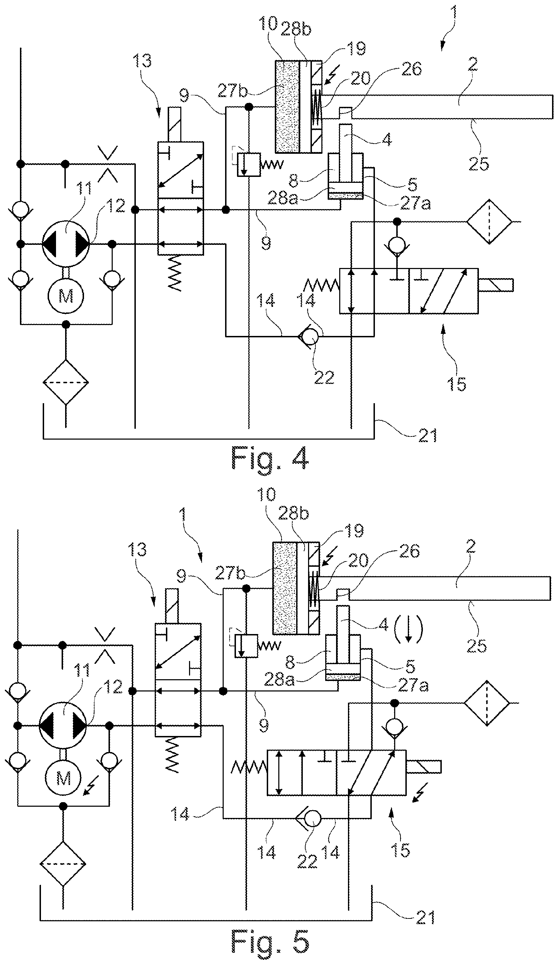

- Fig. 4: eine Prinzipdarstellung des Parksperrenbetätigungssystems, wobei gegenüber Fig. 3 sowohl die Druckräume beider Betätigungszylinder als auch der Entriegelungsdruckraum des Verriegelungselementes drucklos geschaltet sind und die Pumpe derart angetrieben ist, dass sie ein Hydraulikmittel in eine dem Betätigungselement und dem Verriegelungselement abgewandte Richtung zu zwei Kühl- und Schmiermittelversorgungseinrichtungen befördert,
- Fig. 5: eine Prinzipdarstellung des Parksperrenbetätigungssystems, wobei gegenüber Fig. 4 die Pumpe ein Hydraulikmittel in Richtung eines den Druckräumen der Betätigungszylinder vorgeschalteten ersten Ventils befördert, jedoch das erste Ventil sowie ein dem ersten Ventil nachgeschaltetes Ventil derart geschaltet sind, dass das Hydraulikmittel hin zu einer Kupplungsbetätigungseinheit geleitet wird,

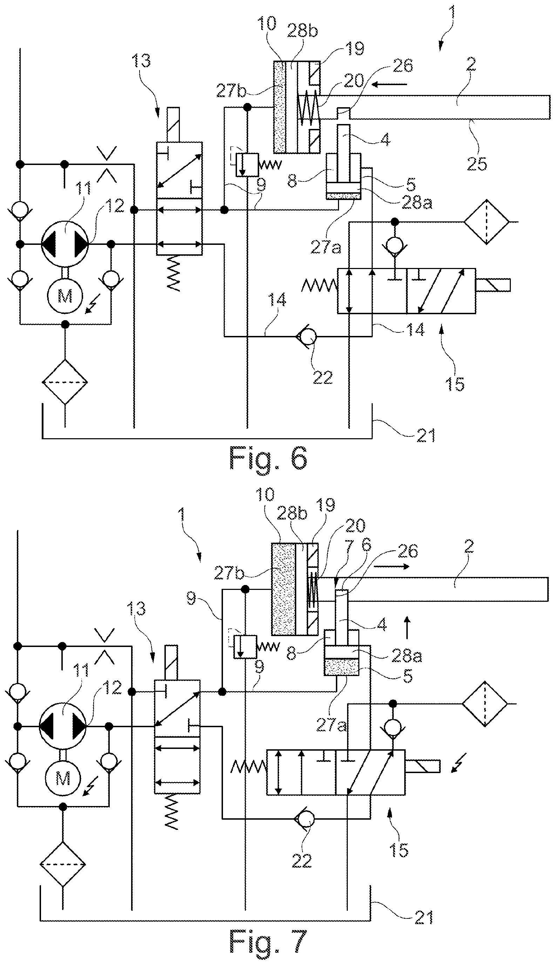

- Fig. 6: eine Prinzipdarstellung des Parksperrenbetätigungssystems, wobei gegenüber Fig. 5 sowohl die Pumpe als auch der Haltemagnet abgeschaltet sind und der Druckraum des dem Betätigungselement zugeordneten Betätigungszylinders drucklos geschaltet ist, sodass das Betätigungselement durch seine Vorspannfeder zurück in die Grundstellung / Sperrstellung gedrückt wird,
- Fig. 7: eine Prinzipdarstellung des Parksperrenbetätigungssystems, ähnlich zu Fig. 2, wobei das erste Ventil derart geschaltet ist, dass ein von der Pumpe zu den Druckräumen hin befördertes Hydraulikmittel das Betätigungselement in seine Entsperrstellung und das Verriegelungselement an das Betätigungselement drückt, sodass das Betätigungselement schließlich in seiner Entsperrstellung formschlüssig durch eine selbsthemmende Verbindung mit einer Haltekontur des Verriegelungselementes abgestützt wird, und wobei zugleich der Entriegelungsdruckraum drucklos geschaltet ist,

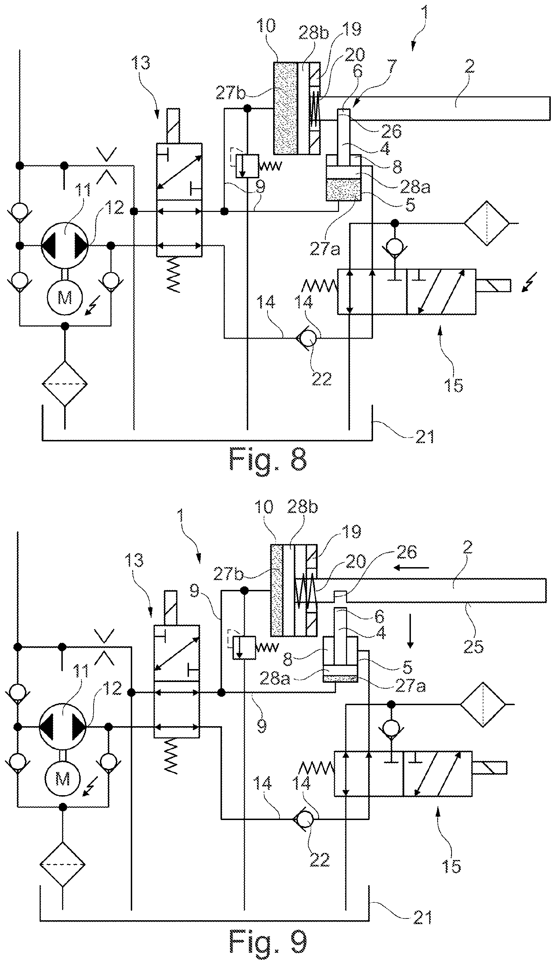

- Fig. 8: eine Prinzipdarstellung des Parksperrenbetätigungssystems, wobei gegenüber Fig. 7 die Pumpe wiederum abgeschaltet ist und die Druckräume drucklos geschaltet sind, das Betätigungselement jedoch aufgrund der selbsthemmenden Verbindung mit dem Verriegelungselement in seiner Entsperrstellung verweilt, sowie
- Fig. 9: eine Prinzipdarstellung des Parksperrenbetätigungssystems zur Veranschaulichung eines Wiederaufhebens des Transportzustandes nach Fig. 8, wobei das Verriegelungselement durch Druckbeaufschlagung seines Entriegelungsdruckraums derart hydraulisch in Richtung des Haltemagneten gedrückt wird, dass die selbsthemmende Verbindung zwischen dem Verriegelungselement aufgehoben wird und das Betätigungselement sowie das Verriegelungselement in ihre Grundstellungen gedrückt werden.

Die Figuren sind lediglich schematischer Natur und dienen ausschließlich dem Verständnis der Erfindung. Die gleichen Elemente sind mit denselben Bezugszeichen versehen.

Mit Fig. 1 ist der prinzipielle Aufbau eines erfindungsgemäßen Parksperrenbetätigungssystems 1 nach einem ersten Ausführungsbeispiel gut zu erkennen. Das Parksperrenbetätigungssystem 1 weist eine Hydraulikeinheit 23 / Hydraulikseite und eine Mechanik 24 / mechanische Seite auf. Die Hydraulikeinheit 23 ist über ein Betätigungselement 2 mit der Mechanik 24 gekoppelt. Auch weist die Hydraulikeinheit 23 auf übliche Weise zusätzliche hydraulische Verbraucher 16, 17, 18 auf. Die Hydraulikeinheit 23 ist über eine einzige Pumpe 11 (Reversierpumpe) angetrieben / versorgt. Die Hydraulikeinheit 23 wird demnach für die nachfolgende Betrachtung als Bestandteil des Parksperrenbetätigungssystems 1 angesehen.

Das Parksperrenbetätigungssystem 1 dient auf typische Weise zum Betätigen einer Parksperre 3, die in Fig. 1 vereinfacht dargestellt ist. In einer aktivierten Stellung der Parksperre 3 ist ein Abtriebsbestandteil des Kraftfahrzeuges gesperrt, wohingegen der Abtriebsbestandteil in einer inaktiven Stellung der Parksperre 3 frei rotierbar und somit antreibbar ist.

Das Betätigungselement 2 des Parksperrenbetätigungssystems 1 ist direkt zum Verstellen der entsprechenden Parksperre 3 eingesetzt. Das Betätigungselement 2 ist über einen (zweiten) hydraulischen Betätigungszylinder 10 mit der Hydraulikeinheit 23 wirkverbunden.

Neben dem mit dem Betätigungselement 2 verbundenen (zweiten) Betätigungszylinder 10 sind in dieser Ausführung ein erster Verbraucher 16 in Form einer Kupplungsbetätigungseinheit 29 aufweisend einen Nehmerzylinder, ein zweiter Verbraucher 17 in Form einer Kühl- und Schmiermittelversorgungseinrichtung und ein dritter Verbraucher 18, ebenfalls in Form einer Kühl- und Schmiermittelversorgungseinrichtung, in der Hydraulikeinheit 23 vorhanden (Fig. 1). Der weitere Aufbau und die Funktionsweise des erfindungsgemäßen Parksperrenbetätigungssystems 1 wird nachfolgend anhand des zweiten Ausführungsbeispiel der Figuren 2 bis 9 beschrieben, welches zweite Ausführungsbeispiel wie das erste Ausführungsbeispiel aufgebaut ist, sich lediglich durch ein in einem nachfolgend beschriebenen Leitungsabschnitt 14 eingesetzten Rückschlagventil 22 von dem ersten Ausführungsbeispiel unterscheidet. Der nachfolgende Aufbau und die Funktionsweise des Parksperrenbetätigungssystems 1 des zweiten Ausführungsbeispiels trifft folglich auch auf das Parksperrenbetätigungssystem 1 des ersten Ausführungsbeispiels zu.

Das Betätigungselement 2 ist im Wesentlichen als Kolbenstange realisiert und durch eine Vorspannfeder 20 in eine als Sperrstellung dienende Grundstellung hin vorgespannt. In dieser Sperrstellung ist die Parksperre 3 aktiv (Fig.1). In einem mit einem hydraulischen Druck beaufschlagten Zustand des zweiten Betätigungszylinders 10 wird das Betätigungselement 2 von seiner Sperrstellung entgegen der Federkraft der Vorspannfeder 20 in seine Entsperrstellung gedrückt (Fig. 2). Im üblichen Fahrbetrieb des Kraftfahrzeuges wird das Betätigungselement 2 durch einen zugleich als Anschlag dienenden Haltemagneten 19 in der Entsperrstellung gehalten. Wenn das Betätigungselement 2 durch den bestromten Haltemagneten 19 in der Entsperrstellung gehalten wird, wird der hydraulische Druck am zweiten Betätigungszylinder 10 wiederum gegenüber dem Zustand nach Fig. 2 reduziert bzw. wird der zweite Betätigungszylinder 10 drucklos geschaltet (Fig. 3).

Zum Ansteuern des zweiten Betätigungszylinder 10 ist dieser über ein erstes Ventil 13 mit einer Pumpe 11 / einem Ausgang 12 der Pumpe 11 gekoppelt / koppelbar. Das erste Ventil 13 ist als 4/2-Wegeventil realisiert. In einer in Fig. 3 umgesetzten ersten Stellung, die als federvorgespannte Ruhestellung des ersten Ventils 13 umgesetzt ist, ist der zweite Betätigungszylinder 10, d.h. ein (zweiter) hydraulischer Druckraum 27b des zweiten Betätigungszylinders 10 drucklos geschalten / mit einem Tank 21 verbunden. In einer zweiten Stellung des ersten Ventils 13 wird der Pumpenausgang 12 mit dem zweiten Betätigungszylinder 10 gemäß der Fig. 2 verbunden. Diese zweite Stellung entspricht einer elektromagnetisch aktivierten Stellung des ersten Ventils 13.

Erfindungsgemäß weist das Parksperrenbetätigungssystem 1 weiterhin ein auf das Betätigungselement 2 einwirkendes Verriegelungselement 4 auf, das ebenfalls durch die Hydraulikeinheit 23 betätigt / verstellt wird. Das Verriegelungselement 4 ist als Bolzen / Stift realisiert und quer zu dem Betätigungselement 2 verschiebbar. Das Verriegelungselement 4 ist mit einem (ersten) Betätigungszylinder 5 der Hydraulikeinheit 23 gekoppelt und durch diesen verschiebbar. Dieser erste Betätigungszylinder 5 ist als doppeltwirkender hydraulischer Betätigungszylinder ausgebildet. Demnach weist der erste Betätigungszylinder 5 einen (ersten) Druckraum 27a und einen diesem ersten Druckraum 27a entgegenwirkenden Entriegelungsdruckraum 8 auf. Der erste Druckraum 27a wirkt folglich in seinem druckbeaufschlagten Zustand derart auf einen mit dem Verriegelungselement 4 gekoppelten (ersten) Kolben 28a ein, dass das Verriegelungselement 4 in Richtung des Betätigungselementes 2 gedrückt wird. Demnach wirkt der Entriegelungsdruckraum 8 in seinem druckbeaufschlagten Zustand derart auf den ersten Kolben 28a ein, dass das Verriegelungselement 4 in Richtung seiner Grundstellung und somit in eine vom Betätigungselement 2 / von einer Außenseite 25 des Betätigungselementes 2 beabstandete Stellung gedrückt wird.

Weiterhin ist zu erkennen, dass die beiden Druckräume 27a und 27b mit einer gemeinsamen Hydraulikmittelzuführleitung 9 verbunden sind. Die beiden Betätigungsfeld Zylinder 5,10 sind folglich seitens ihrer Druckräume 27a, 27b miteinander verbunden. Diese Hydraulikmittelzuführleitung 9 ist dann über das erste Ventil 13 an den Pumpenausgang 12 angeschlossen.

Der Entriegelungsdruckraum 8 ist weiterhin über ein zweites Ventil 15 sowie über das erste Ventil 13 mit dem Pumpenausgang 12 hydraulisch verbunden bzw. koppelbar. Das zweite Ventil 15 ist als 5/2-Wegeventil ausgebildet. In einer ersten Stellung des zweiten Ventils 15, die als federvorgespannte Ruhestellung umgesetzt ist, ist der Entriegelungsdruckraum 8 mit einem zwischen dem ersten Ventil 13 und dem zweiten Ventil 15 verlaufenden Leitungsabschnitt 14 verbunden.

Diesbezüglich wird darauf hingewiesen, dass in genau diesem Leitungsabschnitt 14 in dem zweiten Ausführungsbeispiel das Rückschlagventil 22 eingesetzt ist. Das Rückschlagventil 22 ist derart eingesetzt, dass es einen Rückfluss von Hydraulikmittel von dem Entriegelungsdruckraum 8 hin zu dem ersten Ventil 13 sperrt und einen Hydraulikmittelfluss von dem ersten Ventil 13 hin zu dem Entriegelungsdruckraum 8 ermöglicht / freigibt. In dem ersten Ausführungsbeispiel der Figur 1 ist auf dieses Rückschlagventil 22 gar verzichtet.

Eine zweite Stellung des zweiten Ventils 15 ist mit Figur 5 veranschaulicht. In dieser zweiten Stellung ist der Leitungsabschnitt 14 mit der Kupplungsbetätigungseinheit 29 verbunden, während der Entriegelungsdruckraum 8 drucklos geschaltet / mit dem Tank 21 verbunden ist.

Das Verriegelungselement 4 dient zum formschlüssigen Halten / Sperren des Betätigungselementes 2 in seiner Entsperrstellung, vorzugsweise zum Umsetzen eines Transportzustandes und einer Limp-Home-Funktionalität des Kraftfahrzeugs. Das Verriegelungselement 4 ist an einem dem Betätigungselement 2 zugewandten Ende, das in formschlüssigen Eingriff mit dem Betätigungselement 2 bringbar ist, mit einer Haltekontur 6 versehen. Diese Haltekontur 6 ist in eine komplementär zu ihr ausgebildete Aussparung 26 (Nut) des Bewegungselementes 2 formschlüssig in Eingriff bringbar.

Mit Figur 2 ist zunächst dargestellt, wie das Betätigungselement 2 im üblichen Fahrbetrieb in seine Entsperrstellung verbracht wird und durch den Haltemagneten 19 fixiert wird. Zum Bewegen des Betätigungselementes 2 von seiner Sperrstellung gemäß Figur 1 in seine Entsperrstellung gemäß Figur 2 wird die Pumpe 11 in eine 1. Förderrichtung betrieben, sodass sie an dem den Betätigungszylindern 5, 10 zugewandten Ausgang 12 einen entsprechenden Druck aufbaut. Durch Ansteuern / Bestromen des ersten Ventils 13 ist dieses in seine zweite Stellung geschaltet und ermöglicht somit die Verbindung des Pumpenausgangs 12 mit den beiden Druckräumen 27a, 27b über die Hydraulikmittelzuführleitung 9. ist das Betätigungselement 2 / der mit dem Betätigungselement 2 verbundene (zweite) Kolben 28b des zweiten Betätigungszylinders 10 in Kontakt mit dem als Anschlag dienenden Haltemagneten 19 und folglich in seiner Entsperrstellung, wird der Haltemagneten 19 an geschaltet / bestromt, das Betätigungselement 2 in dieser Entsperrstellung zu fixieren.

Wie weiterhin aus den Figuren 2 und 3 hervorgeht, wird im üblichen Fahrbetrieb das Verriegelungselement 4 beabstandet zu dem Betätigungselement 2 gehalten, um somit eine formschlüssige Verriegelung des Betätigungselementes 2 durch das Verriegelungselement 4 zu vermeiden.

Je nach vorhandener Leckage der Hydraulikeinheit 23, kann zu diesem Zwecke, wie mit Figur 3 dargestellt, der Entriegelungsdruckraum 8 gezielt mit dem Pumpenausgang 12 verbunden werden und mit Druck beaufschlagt werden, um das Verriegelungselement 4 stabil beabstandet zu dem Betätigungselement 2 zu halten. Hierfür wird im Vergleich zu Figur 2 das erste Ventil 13 zurück in seine erste Stellung gebracht, sodass der Druck am Pumpenausgang 12 über das erste Ventil 13 und das zweite Ventil 15 den Entriegelungsdruckraum 8 erreicht. Ist der Entriegelungsdruckraum 8 ausreichend mit Druck beaufschlagt, kommt es zum selbstständigen Schließen des Rückschlagventils 22 (Fig. 4).

Es ist jedoch prinzipiell auch möglich, wie mit Figur 2 angedeutet, dass die Leckage relativ klein ist und das Verriegelungselement 4, trotz Druckbeaufschlagung der Druckräume 27a, 27b, durch das in dem Entriegelungsdruckraum 8 vorhandene Hydraulikmittelpolster beabstandet zu dem Betätigungselement 2 bleibt.

Wie mit den Figuren 4 und 5 weiterhin dargestellt, ist es in diesem üblichen Fahrbetrieb des Kraftfahrzeuges möglich, die einzelnen Verbraucher 16, 17, 18 in Abhängigkeit der Förderrichtung der Pumpe 11 anzusteuern und mit Hydraulikmittel zu versorgen. In Figur 4 ist die Pumpe 11 beispielsweise in eine zur ersten Förderrichtung entgegengesetzten zweiten Förderrichtung betrieben und versorgt folglich den zweiten Verbraucher 17 bzw. dritten Verbraucher 18 mit Hydraulikmittel. In Figur 5 ist die Pumpe 11 wiederum in ihrer ersten Förderrichtung betrieben, wobei der Ausgang 12 über die entsprechenden Stellungen der Ventile 13, 15 mit dem ersten Verbraucher 16 in Form der Kupplungsbetätigungseinheit 29 verbunden ist. In diesem Zustand nach Figur 5 befindet sich das erste Ventil 13 in seiner ersten Stellung, wohingegen das zweite Ventil 15 sich in seiner zweiten Stellung befindet.

Durch Umsetzen eines derartigen Fahrbetriebes ist gewährleistet, dass es zu einer sogenannten Normally-P-Funktionalität kommt und die Parksperre 3 verlässlich sperrt / schließt, falls der Haltemagneten 19 nicht mehr bestromt wird und die Pumpe 11 nicht mehr betrieben wird. Ein entsprechendes selbstständiges Schließen der Parksperre 3 ist mit Figur 6 dargestellt.

Wie in den Fign. 7 und 8 zu erkennen, wird das Verriegelungselement 4 zum Umsetzen eines Transportzustandes oder einer Limp-Home-Funktionalität in einem entsprechenden zweiten Betriebszustand in Form schlüssigen Eingriff mit dem Betätigungselement 2 gebracht. Hierzu wird gemäß Figur 7 die Pumpe 11 in ihrer ersten Förderrichtung betrieben und die beiden Ventile 13, 15 jeweils in ihre zweite Stellung verbracht. Folglich können beide Druckräume 27a, 27b mit dem Pumpendruck beaufschlagt werden und das Betätigungselement 2 sowie das Verriegelungselement 4 von ihrer Grundstellung in ihre ausgefahrene Stellung verbracht werden. Folgerichtig gelangt das Verriegelungselement 4 in formschlüssigen Eingriff mit dem Betätigungselement 2 und fixiert dieses in dessen Entsperrstellung.

Im Anschluss an diesen mit Fig. 7 gezeigten Zustand wird der Zustand nach Fig. 8 erreicht, in dem im Vergleich zu Fig. 7 die beiden Ventile 13, 15 zurück in ihre zweiten Stellungen gebracht werden und die beiden Druckräumen 27a, 27b wieder drucklos geschalten sind. Die formschlüssige Verbindung 7 zwischen dem Verriegelungselement 4 und dem Betätigungselement 2 ist selbsthemmend realisiert. Demnach verbleibt das Verriegelungselement 4 selbsthemmend in formschlüssigem Eingriff mit dem Betätigungselement 2, selbst wenn der zweite Betätigungszylinder 10 gemäß Fig. 8 nicht weiter durch die Pumpe 11 mit Druck beaufschlagt wird. Diese selbsthemmende Verbindung 7 ist in dieser Ausführung prinzipiell durch entsprechende Reibwerte an der Haltekontur 6 sowie an den mit der Haltekontur 6 in Anlage befindlichen Bereichen der Aussparung 26 umgesetzt, kann jedoch auch mit zusätzlichen formschlüssigen Bereichen weiter verstärkt werden. Demnach ist in einer weiteren erfindungsgemäßen Ausführungsform ein Keilbereich an der Haltekontur 6 vorgesehen, der derart angeordnet ist und an einem komplementär zu dem Keilbereich ausgeformten Hinterschnitt der Aussparung 26 anliegt, dass das Verriegelungselement 4 in seiner Längsrichtung formschlüssig an dem Betätigungselement 2 abgestützt ist.

Dadurch, dass das Betätigungselement 2 durch die Federkraft der Vorspannfeder 20 in Richtung seiner Grundstellung / Sperrstellung vorgespannt ist, wirkt die Federkraft der Vorspannfeder 20 verstärkend auf die selbsthemmende Verbindung 7.

Soll gemäß Fig. 9, nach dem Verriegeln des Betätigungselementes 2 mittels des Verriegelungselementes 4 in seiner Entsperrstellung, das Betätigungselement 2 wieder entriegelt / die selbsthemmende Verbindung 7 wieder gelöst werden, wird im Vergleich zu Figur 8 durch Antrieb der Pumpe 11 in der ersten Förderrichtung (und durch Umsetzen der ersten Stellungen der beiden Ventile 13, 15) der Entriegelungsdruckraum 8 druckbeaufschlagt und das Verriegelungselement 4 aus seinem formschlüssigen Eingriff mit dem Betätigungselement 2 in Richtung seiner Grundstellung herausgedrückt, sodass das Betätigungselement 2 in seine Sperrstellung verschoben wird.

Mit anderen Worten ausgedrückt, ist das erfindungsgemäße Parksperrenbetätigungssystem 1 wie folgt ansteuerbar.

Ausgehend von der geschlossenen Parksperre 3 (stehendes Fahrzeug) kann die Parksperre 3 hydraulisch geöffnet werden, indem die (Reversier-) Pumpe 11 in Richtung Parksperren-Betätigungszylinder 10 Druck aufbaut, das Ventil 13 bestromt und damit umgeschaltet wird, sodass die Pumpe 11 mit dem Parksperren-Betätigungszylinder 10 verbunden wird und gleichzeitig der Haltemagnet 19 bestromt wird. Durch den hydraulischen Druck wird die Parksperre 3 geöffnet, gleichzeitig wird Druck im Verriegelungsdruckraum 27a aufgebaut. Da jedoch der Entriegelungsdruckraum 8 nicht mit dem Tank 21 verbunden ist, kann sich das Verriegelungselement 4 nicht in Richtung Betätigungselement 2 bewegen und rastet daher nicht ein (Fig. 2).

Nun wird das Ventil 13 umgeschaltet (unbestromt). Trotz des nun fehlenden Drucks im Parksperren-Betätigungszylinder 10 wird die Parksperre 3 vom Haltemagnet 19 offen gehalten. Sollte vorher das Verriegelungselement 4 aufgrund einer entsprechenden Leckage eingerastet sein, wird es spätestens zu diesem Zeitpunkt wieder außer Eingriff gebracht, da nun Druck im Entriegelungsraum 8 anliegt (Fig. 3).

Wird während der Fahrt das Kühlsystem 17, 18 versorgt (Volumenstrom im Kühlkreislauf, Pumprichtung umgedreht), so liegt aufgrund der Stellungen der Ventile 13, 15 kein Druck in Druckräumen 27a, 8 des Verriegelungszylinders 5 an. Ggf. kann auf das Rückschlagventil 22 (Fig. 4) in der Betätigungsleitung 14 verzichtet werden (gemäß Fig. 1), wenn der Saugdruck der Pumpe 11 nicht ausreichend ist, um das Verriegelungselement 4 einzuspuren (nach oben zu ziehen; Fig.4).

Wird eine Betätigung seitens einer Betätigungseinheit 29 (z.B. Kupplung) angefordert, wird das Steuerventil 15 bestromt, so dass dieses den Druck Richtung Kupplung 29 leitet. Auch hierbei liegt kein Druck am Verriegelungszylinder 5 an (Fig. 5).

Sollte der Strom ausfallen, so stoppt die Pumpe 11, die beiden (alle) Ventile 13, 15 gehen in ihre unbestromte Grundstellung (erste Stellung) und der Haltemagnet 19 fällt ab, so dass die Parksperre 3 nicht mehr offen gehalten wird. Zum schnellen Schließen der Parksperre 3 kann nun das im Parksperren-Betätigungszylinder 10 vorhandene Ölvolumen über das Ventil 13 direkt in den Tank 21 abfließen. Somit ist die Normally-P-Funktionalität gewährleistet (Fig. 6).

Soll der Transportmodus aktiviert werden, werden die beiden Ventile 13, 15 umgeschaltet. Wird nun von der Pumpe 11 ein Druck aufgebaut, werden sowohl der Parksperren-Betätigungszylinder 10 durch den zweiten Druckraum 27b als auch der Verriegelungsdruckraum 27a mit Druck beaufschlagt, so dass die Parksperre 3 geöffnet wird und das Verriegelungselement 4 einrastet, da der Druck aus dem Entriegelungsdruckraum 8 Richtung Tank 21 abfließen kann (Fig. 7).

Nun kann der Strom abgeschaltet werden (aktiv, Stromausfall, Batterie leer, etc.). Alle Ventile 13, 15 gehen in ihre Grundstellung, die Pumpe 11 stoppt und der Haltemagnet 19 ist inaktiv. Trotzdem wird nun die Parksperre 3 durch das verriegelte Verriegelungselement 4 (passiv) offen gehalten (Fig. 8).

Auf die gleiche Weise wie der Transportmodus kann auch die Limp-Home-Funktionalität dargestellt werden, für den Fall, dass der Haltemagnet 19 ausfällt. Das System 1, 23 ist ansonsten weiter voll funktionstüchtig (Kühlen, Betätigen). Einzig die Normally-P-Funktionalität ist nicht mehr gewährleistet, was vorzugsweise dem Fahrer als "Fehler" angezeigt wird, mit dem Hinweis dazu eine Fachwerkstatt aufzusuchen (Fig. 8).

### Bezugszeichenliste

- 1: Parksperrenbetätigungssystem
- 2: Betätigungselement
- 3: Parksperre
- 4: Verriegelungselement
- 5: erster Betätigungszylinder
- 6: Haltekontur
- 7: Verbindung
- 8: Entriegelungsdruckraum
- 9: Hydraulikmittelzuführleitung
- 10: zweiter Betätigungszylinder
- 11: Pumpe
- 12: Ausgang
- 13: erstes Ventil
- 14: Leitungsabschnitt
- 15: zweites Ventil
- 16: erster Verbraucher
- 17: zweiter Verbraucher
- 18: dritter Verbraucher
- 19: Haltemagnet
- 20: Vorspannfeder
- 21: Tank
- 22: Rückschlagventil
- 23: Hydraulikeinheit
- 24: Mechanik
- 25: Außenseite
- 26: Aussparung
- 27a: erster Druckraum
- 27b: zweiter Druckraum
- 28a: erster Kolben
- 28b: zweiter Kolben
- 29: Kupplungsbetätigungseinheit

## Patentansprüche

1. Parksperrenbetätigungssystem (1) für ein Kraftfahrzeug, mit einem mit einer Parksperre (3) koppelbaren oder gekoppelten Betätigungselement (2), welches Betätigungselement (2) zwischen einer Sperrstellung, in der die Parksperre (3) aktiv ist, und einer Entsperrstellung, in der die Parksperre (3) inaktiv ist, verschiebbar ist, und mit einem zum formschlüssigen Fixieren des Betätigungselementes (2) in seiner Entsperrstellung ausgebildeten Verriegelungselement (4),
wobei das Betätigungselement (2) und das Verriegelungselement (4) jeweils mit einem hydraulischen Betätigungszylinder (5, 10) wirkverbunden sind, wobei die beiden hydraulischen Betätigungszylinder (5, 10) seitens eines Druckraums (27a, 27b) mit einer gemeinsamen Hydraulikmittelzuführleitung (9) verbunden sowie über ein erstes Ventil (13) mit einer Pumpe (11) gekoppelt sind,
**dadurch gekennzeichnet, dass**
der Betätigungszylinder (5) des Verriegelungselementes (4) ferner einen entgegengesetzt zu seinem Druckraum (27a) wirkenden Entriegelungsdruckraum (8) aufweist, der über ein zweites Ventil (15) mit der Pumpe (11) koppelbar ist, so dass das Verriegelungselement (4) im druckbeaufschlagten Zustand des
Entriegelungsdruckraums (8) in eine vom Betätigungselement (2) beabstandete Stellung gedrückt wird.

2. Parksperrenbetätigungssystem (1) nach Anspruch 1, **dadurch gekennzeichnet, dass** das erste Ventil (13) zwischen einem Ausgang (12) der Pumpe (11) einerseits und der Hydraulikmittelzuführleitung (9) andererseits wirkend eingesetzt ist und derart ausgebildet ist, dass es in seiner ersten Stellung die Hydraulikmittelzuführleitung (9) drucklos schaltet, während ein mit dem zweiten Ventil (15) weiter verbundener Leitungsabschnitt (14) mit dem Pumpenausgang (12) verbunden ist, und in seiner zweiten Stellung den Pumpenausgang (12) mit der Hydraulikmittelzuführleitung (9) verbindet, während der mit dem zweiten Ventil (15) weiter verbundene Leitungsabschnitt (14) von dem Pumpenausgang (12) abgetrennt ist.

3. Parksperrenbetätigungssystem (1) nach Anspruch 1 oder 2, **dadurch gekennzeichnet, dass** das zweite Ventil (15) derart ausgebildet ist, dass es in seiner ersten Stellung einen pumpenseitigen Leitungsabschnitt (14) mit dem Entriegelungsdruckraum (8) verbindet und in seiner zweiten Stellung den Entriegelungsdruckraum (8) drucklos schaltet.

4. Parksperrenbetätigungssystem (1) nach Anspruch 3, **dadurch gekennzeichnet, dass** das zweite Ventil (15) derart ausgebildet und angeschlossen ist, dass der pumpenseitige Leitungsabschnitt (14) in der zweiten Stellung des zweiten Ventils (15) mit einer weiteren hydraulischen Betätigungseinheit (29) verbunden ist.

5. Parksperrenbetätigungssystem (1) nach einem der Ansprüche 1 bis 4, **dadurch gekennzeichnet, dass** die Pumpe (11) mit weiteren hydraulischen Verbrauchern (16, 17, 18) gekoppelt oder koppelbar ist.

6. Parksperrenbetätigungssystem (1) nach einem der Ansprüche 1 bis 5, **dadurch gekennzeichnet, dass** die Pumpe (11) als Reversierpumpe ausgebildet ist.

7. Parksperrenbetätigungssystem (1) nach einem der Ansprüche 1 bis 6, **dadurch gekennzeichnet, dass** ein das Betätigungselement (2) in seiner Entsperrstellung haltender, elektrisch betätigter Haltemagnet (19) vorhanden ist.

8. Verfahren zum Ansteuern eines Parksperrenbetätigungssystems (1) nach einem der Ansprüche 1 bis 7, wobei das Betätigungselement (2) in einem ersten Betriebszustand durch Verbinden der Hydraulikmittelzuführleitung (9) mit dem Pumpenausgang (12) und entsprechendem Druckaufbau an dem Pumpenausgang (12) in seine Entsperrstellung gedrückt wird, während das Verriegelungselement (4) durch einen druckbeaufschlagten Zustand des Entriegelungsdruckraums (8) des dem Verriegelungselement (4) zugeordneten Betätigungszylinders (5) beabstandet zu dem Betätigungselement (2) ist, und in einem zweiten Betriebszustand, in einem druckbeaufschlagten Zustand des Druckraums (27a) des dem Verriegelungselement (4) zugeordneten Betätigungszylinders (5), gegen das Betätigungselement (2) gedrückt wird und in formschlüssigen Eingriff mit dem Betätigungselement (2) gelangt.

9. Verfahren nach Anspruch 8, **dadurch gekennzeichnet, dass** das Betätigungselement (2) derart federvorgespannt ist, dass es in dem zweiten Betriebszustand, in seiner Entsperrstellung, durch diese Federvorspannung in eine eine selbsthemmende Verbindung (7) zwischen dem Verriegelungselement (4) und dem Betätigungselement (2) verstärkende Position gedrückt ist und das Verriegelungselement (4) bei erneutem Druckabfall an dem Betätigungszylinder (10) des Betätigungselementes (2) festgeklemmt ist.

10. Verfahren nach Anspruch 8 oder 9, **dadurch gekennzeichnet, dass** der Formschluss zwischen dem Verriegelungselement (4) und dem Betätigungselement (2) wieder aufgehoben wird und das Verriegelungselement (4) zurück in die Stellung des ersten Betriebszustandes gelangt, indem der Entriegelungsdruckraum (8) über die Pumpe (11) mit Druck beaufschlagt wird bis die selbsthemmende Verbindung (7) zwischen dem Verriegelungselement (4) und dem Betätigungselement (2) aufgehoben ist.

## Claims

1. A parking lock actuation system (1) for a motor vehicle, having an actuation element (2) that is coupled or can be coupled to a parking lock (3), which actuation element (2) can be moved between a locking position, in which the parking lock (3) is active, and an unlocking position, in which the parking lock (3) is inactive, and comprising a locking element (4) which is designed to fix the actuation element (2) in the unlocking position in a form-fitting manner, wherein the actuation element (2) and the locking element (4) are each operatively connected to a respective hydraulic actuation cylinder (5, 10), and the two hydraulic actuation cylinders (5, 10) are connected to a common hydraulic fluid supply line (9) by a pressure chamber (27a, 27b) and are coupled to a pump (11) via a first valve (13), **characterised in that** the actuation cylinder (5) of the locking element (4) additionally has an unlocking pressure chamber (8) acting in the opposite direction to its pressure chamber (27a), which unlocking pressure chamber can be coupled to the pump (11) via a second valve (15), such that the locking element (4) is pressed into a position at a distance from the actuation element (2) when the unlocking pressure chamber (8) is pressurised.

2. The parking lock actuation system (1) according to claim 1, **characterised in that** the first valve (13) is operatively inserted between an outlet (12) of the pump (11) on the one hand and the hydraulic fluid supply line (9) on the other hand and is designed in such a way that, in its first position, it depressurises the hydraulic fluid supply line (9), while a line section (14) further connected to the second valve (15) is connected to the pump outlet (12), and, in its second position, connects the pump outlet (12) to the hydraulic fluid supply line (9), while the line section (14) further connected to the second valve (15) is separated from the pump outlet (12).

3. The parking lock actuation system (1) according to claim 1 or 2, **characterised in that** the second valve (15) is designed in such a way that, in its first position, it connects a pump-side line section (14) to the unlocking pressure chamber (8) and, in its second position, depressurises the unlocking pressure chamber (8).

4. The parking lock actuation system (1) according to claim 3, **characterised in that** the second valve (15) is designed and connected in such a way that the pump-side line section (14) is connected to a further hydraulic actuation unit (29) when the second valve (15) is in the second position.

5. The parking lock actuation system (1) according to one of claims 1 to 4, **characterised in that** the pump (11) is coupled or can be coupled to further hydraulic consumers (16, 17, 18).

6. The parking lock actuation system (1) according to one of claims 1 to 5, **characterised in that** the pump (11) is designed as a reversible pump.

7. The parking lock actuation system (1) according to one of claims 1 to 6, **characterised in that** an electrically actuated holding magnet (19) holding the actuation element (2) in its unlocking position is provided.

8. A method for actuating a parking lock actuation system (1) according to one of claims 1 to 7, wherein the actuation element (2), in a first operating state, is pressed into its unlocking position by connecting the hydraulic fluid supply line (9) to the pump outlet (12) and a corresponding pressure build-up at the pump outlet (12), while the locking element (4) is spaced apart from the actuation element (2) by means of a pressurised state of the unlocking pressure chamber (8) of the actuation cylinder (5) associated with the locking element (4), and, in a second operating state, in a pressurised state of the pressure chamber (27a) of the actuation cylinder (5) associated with the locking element (4), is pressed against the actuation element (2) and comes into form-fitting engagement with the actuation element (2).

9. The method according to claim 8, **characterised in that** the actuation element (2) is spring-preloaded in such a way that, in the second operating state, in its unlocking position, it is pressed by this spring preload into a position reinforcing a self-locking connection (7) between the locking element (4) and the actuation element (2) and the locking element (4) is clamped to the actuation cylinder (10) of the actuation element (2) when the pressure drops again.

10. The method according to claim 8 or 9, **characterised in that** the form-fit between the locking element (4) and the actuation element (2) is cancelled again and the locking element (4) returns to the position of the first operating state **in that** the unlocking pressure chamber (8) is pressurised via the pump (11) until the self-locking connection (7) between the locking element (4) and the actuation element (2) is cancelled.

## Revendications

1. Système d'actionnement de verrouillage de stationnement (1) pour un véhicule automobile, comportant un élément d'actionnement (2) couplé ou pouvant être couplé à un verrouillage de stationnement (3), lequel élément d'actionnement (2) se déplace entre une position de verrouillage, dans laquelle le verrouillage de stationnement (3) est actif, et une position de déverrouillage, dans laquelle le verrouillage de stationnement (3) est inactif, et comportant un élément de verrouillage (4) conçu pour fixer par complémentarité de forme l'élément d'actionnement (2) dans sa position de déverrouillage, dans lequel l'élément d'actionnement (2) et l'élément de verrouillage (4) coopèrent respectivement avec un cylindre d'actionnement hydraulique (5, 10), dans lequel les deux cylindres d'actionnement hydrauliques (5, 10) sont reliés à une conduite d'alimentation en fluide hydraulique (9) commune du côté d'une chambre de pression (27a, 27b) et accouplés à une pompe (11) par l'intermédiaire d'une première soupape (13), **caractérisé en ce que** le cylindre d'actionnement (5) de l'élément de verrouillage (4) présente également une chambre de pression de déverrouillage (8) qui agit à l'opposé de sa chambre de pression (27a), qui peut être accouplée à la pompe (11) par l'intermédiaire d'une seconde soupape (15), de sorte que l'élément de verrouillage (4)lorsque la chambre de pression de déverrouillage (8) est mise sous pression, soit pressé dans une position espacée de l'élément d'actionnement (2).

2. Système d'actionnement de verrouillage de stationnement (1) selon la revendication 1, **caractérisé en ce que** la première soupape (13) est insérée de manière active entre une sortie (12) de la pompe (11) d'une part et la conduite d'alimentation en fluide hydraulique (9) d'autre part et est conçue de telle sorte que, dans sa première position, elle met la conduite d'alimentation en fluide hydraulique (9) hors pression, tandis qu'une section de conduite (14) reliée en outre à la seconde soupape (15) est reliée à la sortie de pompe (12) et, dans sa seconde position, elle relie la sortie de pompe (12) à la conduite d'alimentation en fluide hydraulique (9), tandis que la section de conduite (14) reliée en outre à la seconde soupape (15) est séparée de la sortie de pompe (12).

3. Système d'actionnement de verrouillage de stationnement (1) selon la revendication 1 ou 2, **caractérisé en ce que** la seconde soupape (15) est conçue de telle sorte qu'elle relie, dans sa première position, une section de conduite (14) côté pompe à la chambre de pression de déverrouillage (8) et dans sa seconde position, qu'elle met la chambre de pression de déverrouillage (8) hors pression.

4. Système d'actionnement de verrouillage de stationnement (1) selon la revendication 3, **caractérisé en ce que** la seconde soupape (15) est conçue et raccordée de telle sorte que la section de conduite (14) côté pompe soit reliée à une autre unité d'actionnement hydraulique (29) dans la seconde position de la seconde soupape (15).

5. Système d'actionnement de verrouillage de stationnement (1) selon l'une des revendications 1 à 4, **caractérisé en ce que** la pompe (11) est accouplée ou peut être accouplée à d'autres consommateurs hydrauliques (16, 17, 18).

6. Système d'actionnement de verrouillage de stationnement (1) selon l'une des revendications 1 à 5, **caractérisé en ce que** la pompe (11) est conçue comme une pompe réversible.

7. Système d'actionnement de verrouillage de stationnement (1) selon l'une des revendications 1 à 6, **caractérisé en ce qu'un** aimant de maintien (19) actionné électriquement maintient l'élément d'actionnement (2) dans sa position de déverrouillage.

8. Procédé de commande d'un système d'actionnement de verrouillage de stationnement (1) selon l'une des revendications 1 à 7, dans lequel l'élément d'actionnement (2) est poussé dans sa position de déverrouillage, dans un premier état de fonctionnement, par la liaison de la conduite d'alimentation en fluide hydraulique (9) à la sortie de pompe (12) et par une montée en pression correspondante à la sortie de pompe (12), tandis que l'élément de verrouillage (4) est espacé de l'élément d'actionnement (2) par un état sous pression de la chambre de pression de déverrouillage (8) du cylindre d'actionnement (5) associé à l'élément de verrouillage (4) et, dans un second état de fonctionnement, dans un état sous pression de la chambre de pression (27a) du cylindre d'actionnement (5) associé à l'élément de verrouillage (4), est poussé contre l'élément d'actionnement (2) et vient en prise par complémentarité de forme avec l'élément d'actionnement (2).

9. Procédé selon la revendication 8, **caractérisé en ce que** l'élément d'actionnement (2) est précontraint par ressort de telle sorte que dans le second état de fonctionnement, dans sa position de déverrouillage, il est poussé par cette précontrainte de ressort dans une position renforçant une liaison autobloquante (7) entre l'élément de verrouillage (4) et l'élément d'actionnement (2) et l'élément de verrouillage (4) est serré solidement sur le cylindre d'actionnement (10) de l'élément d'actionnement (2) en cas de nouvelle chute de pression.

10. Procédé selon la revendication 8 ou 9, **caractérisé en ce que** la complémentarité de forme entre l'élément de verrouillage (4) et l'élément d'actionnement (2) est à nouveau supprimée et l'élément de verrouillage (4) revient à la position du premier état de fonctionnement en mettant sous pression la chambre de pression de déverrouillage (8) par l'intermédiaire de la pompe (11) jusqu'à ce que la liaison autobloquante (7) entre l'élément de verrouillage (4) et l'élément d'actionnement (2) soit supprimée.
